# EUROPÄISCHE PATENTSCHRIFT

(11) **EP 1 428 565 B1**
(45) Veröffentlichungstag und Bekanntmachung des Hinweises auf die Patenterteilung: **21.06.2006**
(21) Anmeldenummer: 03022077.6
(22) Anmeldetag: 02.10.2003
(51) Int. Cl.: B01D 46/02, B01D 46/42, B01D 46/04

(54) **Filtereinrichtung**
Filter device
Dispositif filtrant

(30) Priorität: 14.12.2002 DE 10258526
(43) Veröffentlichungstag der Anmeldung: 16.06.2004
(73) Patentinhaber: Schlick, Jennifer, 33758 Schloss Holte (DE)
(72) Erfinder: Schlick, Jennifer, 33758 Schloss Holte (DE)
(74) Vertreter: Linnemann, Winfried

(56) Entgegenhaltungen:
- DE-A- 2 052 135
- FR-A- 622 926
- US-A- 3 423 908
- US-A- 4 435 197
- US-A- 4 632 681
- US-A- 5 447 544
- US-A- 5 961 696

## Beschreibung

Die Erfindung bezieht sich auf eine Filtereinrichtung gemäß dem Oberbegriff von Anspruch 1.

Bei den Filtereinrichtungen nach dem Stand der Technik wird jeder einzelne dieser Filter mit einer eigenen Vorrichtung an der Trennwand lösbar befestigt. Eine solche Vorrichtung kann aus zwei Exzenterverschlüssen bestehen, mit deren Hilfe jeder Filter für sich an der Trennwand gehalten wird.

Diese Befestigungsart macht das Auswechseln der Filter zu einer langwierigen Prozedur, denn pro Filter müssen zwei Verschlüsse gelöst und nach dem Auswechseln wieder geschlossen werden. Außerdem muß der Monteur zum Auswechseln der Filter in das Innere der Filtereinrichtung steigen, wodurch er einer hohen Staubbelastung ausgesetzt ist.

Die US 4 632 681 A offenbart eine Filtereinrichtung mit mindestens zwei hintereinander angeordneten Filtern, die in einem Gehäuse lösbar befestigt sind, wobei die Filter auf einer Tragschienenanordnung verschiebbar sind.

Die DE 20 52 135 A beschreibt eine Vorrichtung zum Festlegen und Abdichten von Filterzellen im Gehäuse eines Gasfilters, wobei die Filterzellen auf Randdichtungen des Gehäuses festgelegt sind. An dem Gehäuse ist eine bzw. sind mehrere auf die Filterzellen einwirkende, längs verlaufende Halteschienen angebracht, die in Längsrichtung je durch eine Betätigungseinrichtung verschiebbar sind. Je eine Nockeneinrichtung verbindet die Halteschienen mit dem Gehäuse so, daß bei der Längsverschiebung der Halteschienen diese zugleich quer dazu in die Haltestellung bewegbar sind.

Die US 4 435 197 A befaßt sich mit einem Gewebefilter, der horizontal angeordnete Schienen aufweist. Auf den Schienen kann eine Tür mit daran angeordneter Trennwand verschoben werden. An der Trennwand sind Filterelemente angeordnet, die mit einer schubladenartigen Öffnungsbewegung der Tür aus dem Gewebefilter zum Auswechseln herausgezogen werden. Die Filter sind dabei in der Trennplatte eingehängt.

Die US 3 423 908 A offenbart ein von der Seite her zu öffnendes Filtergehäuse mit parallelen und horizontal angeordneten Schienen, so daß Filter seitlich aus dem Gehäuse entfernbar sind.

Der Erfindung liegt die Aufgabe zugrunde eine Filtereinrichtung der eingangs genannten Art mit einfachen Mitteln dahingehend zu verbessern, daß ein Auswechseln der Filter erleichtert und verbessert ist, so daß ein Auswechseln schnell, sicher, sauber und bequem durchzuführen ist.

Erfindungsgemäß wird die Aufgabe durch eine Filtereinrichtung mit den Merkmalen des Anspruch 1 gelöst.

Vorteilhaft kann das Auswechseln aller Filter, also auch der hinteren, von vorne, insbesondere von der Außenwand der Filtereinrichtung her, durchgeführt werden. Ein Betreten des staubigen und evtl. dunklen Innenraumes der Filtereinrichtung, der Staubseite, ist nicht mehr erforderlich. Infolge dessen ist das Auswechseln der Filter ohne lästige oder sogar gesundheitsgefährdende Staubbelastung des Monteurs möglich geworden. Das Auswechseln erfolgt auch nicht mehr unter räumlicher Beengung, sondern alle Filter sind von allen Seiten aus gut zugänglich, so daß ein Auswechseln schnell, sicher und bequem durchzuführen ist. Zudem ist nur noch ein einziger Verschluß zu betätigen und zu überwachen, und zwar an der gut einsehbaren vorderen Seite. Es entfällt somit die Gefahr, daß nach Einbau der Filterreihe einer der bisher verwendeten vielen Verschlüsse sich öffnet, der entsprechende Filter sich von der Trennwand zumindest teilweise löst und somit die Filterwirkung verschlechtert wird.

Die Verschiebbarkeit nach vorne kann beispielsweise so gefördert werden, daß die Filter auf einer Tragschienenanordnung gelagert sind. Die Tragschienen sollen in senkrechter Richtung möglichst biegesteif ausgebildet sein und sind folglich im Querschnitt vorzugsweise I-, O- , U- oder L-förmig ausgebildet. Die Lagerung kann gleitend oder rollend ausgestaltet sein, wobei auf zweckmäßige Materialwahl und Materialpaarung zu achten ist. Insbesondere können die Filter hierzu auf zwei seitlichen Tragschienen gelagert sein. So können die Filter zum Beispiel auch nach Art einer Schublade ausgebildet und/oder gelagert sein.

Um einerseits im Betriebsfalle eine gute und dichte Lagerung der Filter und andererseits beim Auswechseln der Filter ein leichtes Heranholen mindestens eines hinteren Filters sicherzustellen, kann die Tragschienenanordnung schon im Betriebsfall, also in der geschlossenen Stellung, der Filtereinrichtung vom hinteren Ende her schräg zum vorderen Ende zu abfallend angeordnet sein.

Alternativ hierzu kann die Tragschienenanordnung im Betriebsfall der Filtereinrichtung waagerecht angeordnet sein, aber zum Wechseln der Filter vorübergehend in eine Schräglage bringbar sein, in der das vordere Ende tiefer angeordnet ist als das hintere Ende. Bei entsprechender Ausbildung bewegen sich in beiden vorgenannten Fällen die auszuwechselnden Filter quasi selbsttätig zum vorderen, tieferen Ende, wo sie bequem abgenommen und durch neue oder gereinigte Filter ersetzt werden können.

Zum vorgenannten Zweck kann die Tragschienenanordnung so gelagert sein, daß sie an ihrem vorderen Ende nach unten kippbar ist. Im einfachsten Falle ist die Tragschienenanordnung als einarmiger Hebel ausgebildet ist, der am hinteren Ende über eine Schwenkvorrichtung angelenkt ist, und am vorderen Ende eine Befestigungsvorrichtung umfaßt, die im Betriebsfall der Filtereinrichtung die Tragschienenanordnung in ihrer waagerechten, oder auch schrägen, Funktionsstellung am Gehäuse sichert und im Falle eines Wechsels der Filter die Tragschienenanordnung an ihrem vorderen Ende in der schrägen, gesenkten oder weiter gesenkten Lage am Gehäuse festhält.

Eine besonders gute Bedienbarkeit der vorderen Befestigungsvorrichtung von Hand ist gegeben, wenn diese einen U-förmigen zweiarmigen Hebel umfaßt, dessen Steg sich senkrecht zum Verlauf der Tragschienen, vorzugsweise waagerecht, erstreckt. Hierzu kann der U-förmige Hebel an der Tragschienenanordnung um eine quer zum Verlauf der Tragschienen angeordnete Achse drehbar gelagert sein, oder jeder Schenkel des U- förmigen Hebels kann, vorzugsweise an der Außenseite, zwei Bolzen aufweisen, die mit angepaßten, schlitzförmigen und oberhalb der vorgenannten Achse angeordneten Ausnehmungen zweier senkrechter Lagerplatten am Gehäuse, oder indirekt an der Trennwand, zusammenwirken. Durch Wahl geeigneter Hebellängen und damit eines großen Übersetzungsverhältnisses am U-förmigen Hebel wird sowohl das Lösen als auch das Anheben der Tragschienenanordnung kräftemäßig wesentlich erleichtert. Zudem kann der Monteur den waagerechten Steg des Hebels ergonomisch sehr günstig betätigen, nämlich mit beiden Händen - auch unter Einsatz seines Körpergewichts - von oben nach unten drücken, und mit diesem Bewegungsablauf die Tragschienenanordnung selbst bei einem erheblichen Gewicht, z. B. bei mehr als zwei oder bei sehr großen Filtern, in ihre Schließstellung bringen.

Die leichte und vor allem präzise Verschwenkbarkeit der Tragschienenanordnung kann sichergestellt werden, indem die Schwenkvorrichtung aus zwei am Gehäuse verstellbar befestigten, waagerechten Bolzen besteht, die mit angepaßten Ausnehmungen am hinteren Ende der Tragschienenanordnung drehbar zusammenwirken. Durch die Verstellbarkeit der Bolzen können Maßabweichungen der beteiligten Bauteile ausgeglichen werden, so daß eine dichte Anlage der Filter an der Trennwand immer sichergestellt ist.

Das bequeme Auswechseln der Filter kann auch dadurch gefördert werden, daß das Gehäuse im Bereich des vorderen Endes der Tragschienenanordnung eine Tür umfaßt, durch welche die Filter entfernt bzw. eingesetzt werden können.

Eine sichere Zuordnung der einzelnen Filter zu den entsprechenden Öffnungen der Trennwand kann auch bei mehreren oder sogar bei einer Vielzahl von hintereinander angeordneten Filtern gewährleistet werden, wenn zwischen den Filtern Abstandhalter oder vorzugsweise starre Verbinder angeordnet werden. Diese können entweder oberhalb der Tragschienenanordnung oder an den Filtern selbst oder deren Haltern angeordnet werden. Bei einer schon genannten Schubladenanordnung können mehrere Schubläden lösbar miteinander verbunden sein.

Die Filter können bei der Erfindung eine nahezu beliebige Form aufweisen. Ein großes Filtervolumen ist erzielbar, wenn die Filter nach Art von Topffiltern ausgebildet sind, deren Mittelachsen sich mindestens nahezu senkrecht zum Verlauf der Trennwand bzw. der Tragschienenanordnung erstrecken. Dann kann die Filtereinrichtung so ausgebildet sein, daß im Gehäuse oberhalb der Filter zur Reinseite hin eine Trennwand angeordnet ist, welche im Bereich des Innendurchmessers der Filter Öffnungen zum Durchtritt des zu filternden Mediums aufweist und gegen welche die Filter mit ihrem oberen Rand unter Einwirkung der Tragschienenanordnung dicht anliegen.

Die Filtereinrichtung kann wahlweise auch eine zumindest grobe Vorreinigung der auszuwechselnden Filter vorsehen, indem im Bereich der Reinseite oberhalb der Filter eine Vorrichtung angeordnet ist, durch die zum Entstauben der Filter in Richtung der Staubseite Luft in die Filter geblasen werden kann. Zusätzlich können zum bequemen Entsorgen des ausgeblasenen Staubs im Bereich der Staubseite unterhalb der Filter Trichter zum Auffangen des ausgefilterten und abgeblasenen Materials angeordnet sein.

In der Zeichnung ist ein Ausführungsbeispiel der Erfindung dargestellt, das nun näher beschrieben wird.

Fig. 1 zeigt eine Filtereinrichtung zur Entstaubung, mit zwei hintereinander auf einer Tragschienenanordnung gelagerten Filtern, in der Reinigungsstellung.

Fig. 2 zeigt die Filtereinrichtung nach Fig. 1 in der Betriebsstellung.

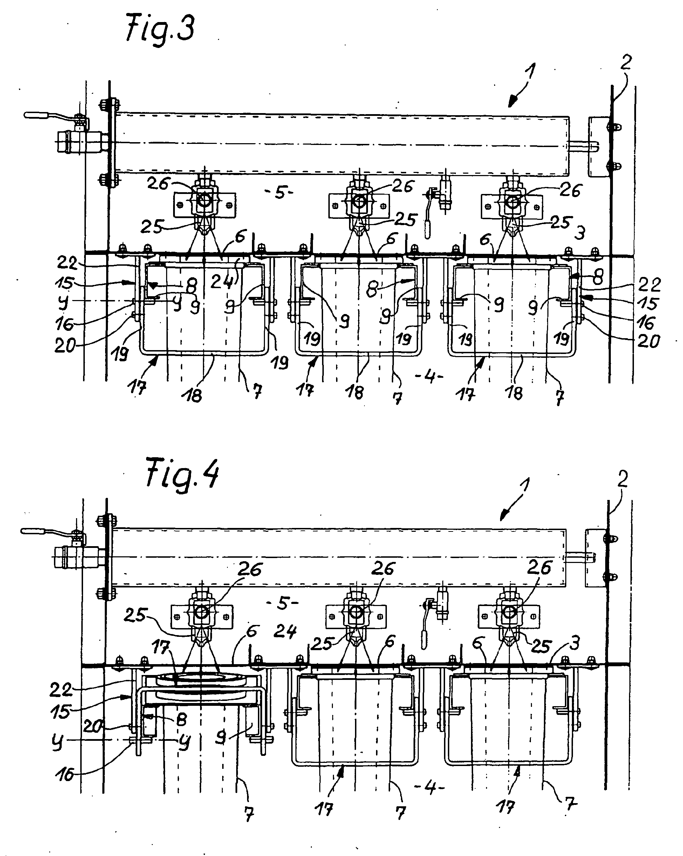

Fig. 3 zeigt die Ansicht der Filtereinrichtung nach Fig. 2 von links, mit drei parallel geschalteten Tragschienenanordnungen.

Fig. 4 zeigt die Ansicht der Filtereinrichtung nach Fig. 3, deren linke Tragschienenanordnung jedoch der Fig. 1 entspricht.

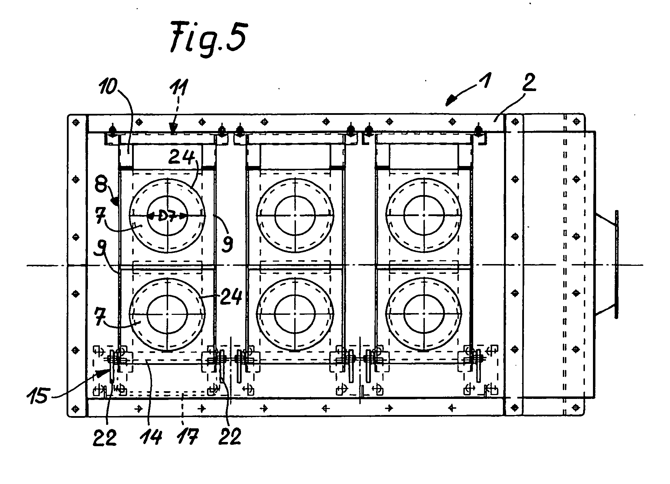

Fig. 5 zeigt die Draufsicht auf die Tragschienenanordnungen nach dem Schnitt V - V in Fig. 2.

Die Filtereinrichtung 1 besteht aus einem geschlossenen Gehäuse 2 mit einer waagerechten Trennwand 3, welche die Staubseite 4 von der Reinseite 5 trennt. In der Trennwand 3 sind Öffnungen 6 eingebracht, die von Topffiltern 7 mit der Mittelachse **Z - Z** und dem Innendurchmesser D7 verschlossen werden sollen. Hierzu sind die Topffilter 7 in einer Tragschienenanordnung 8 in die Richtung **S**, nach vorne zu, verschiebbar gelagert.

Die Tragschienenanordnung 8 ist brücken- oder rahmenförmig und im Prinzip als einarmiger Hebel ausgebildet. Sie besteht zunächst aus zwei in Richtung **X - X** laufenden **U**-förmigen Tragschienen 9, die am hinteren Ende 10 über eine Schwenkvorrichtung 11 an der Trennwand 3 befestigt sind. Die Schwenkvorrichtung 11 besteht aus zwei waagerecht an der Trennwand 3 gelagerten Bolzen 12, die in angepaßte Ausnehmungen 13 am hinteren Ende10 der Tragschienen 9 drehbar eingreifen. Die Tragschienenanordnung 8 ist somit am hinteren Ende 10 um die Bolzen 12 nach unten in die dargestellte Schräglage so schwenkbar oder kippbar, daß das vordere Ende 14 die tiefere Lage einnimmt: Die Tragschienenanordnung 8 ist in diesem Fall in eine nach vorne abfallende Schräglage unter dem Winkel α gebracht.

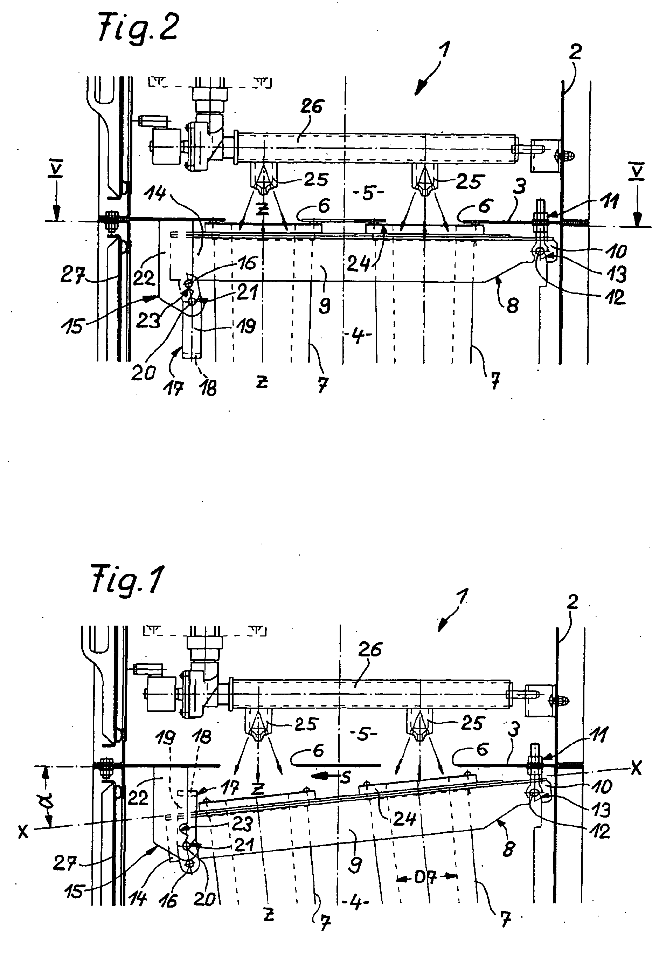

Am vorderen Ende 14 umfaßt die Tragschienenanordnung 8 eine Befestigungsvorrichtung 15, die aus einem um zwei Bolzen 16 mit der Achse **Y - Y** schwenkbaren **U**-förmigen Hebel 17 besteht. Der Steg 18 des Hebels 17 erstreckt sich, genau wie seine Schwenkachse **Y - Y ,** senkrecht zum Verlauf **X - X** der Tragschienen 9. Der Hebel 17 umfaßt an seinen Schenkeln 19 oberhalb der Bolzen 16 zwei weitere parallel hierzu verlaufende Bolzen 20, die beim Verschwenken des Hebels 17 in Ausnehmungen 21 zweier senkrechter, zugeordneter Lagerplatten 22 an der Trennwand 3 drehend eingreifen. Oberhalb der Ausnehmungen 21 sind in den Lagerplatten 22 zwei weitere Ausnehmungen 23 eingebracht. Die Anordnung der beiden Ausnehmungen 21 und 23 in Bezug zu den Bolzen 16 und 20 ist so getroffen, daß bei der Stellung des Hebels 17 mit dem Steg 18 nach oben das vordere Ende 14 der Tragschienenanordnung 8 sich in der abgesenkten Lage α, der Reinigungsstellung, befindet, vergl. Fig. 1, während sich bei der Stellung des Hebels 17 mit dem Steg 18 nach unten das vordere Ende 14 sich in der oberen Lage, der Betriebsstellung, befindet, vergl. Fig. 2.

Der Hebel 17 bildet demnach im Zusammenwirken mit den Bolzen 16 und 20 und den Ausnehmungen 21 und 23 der Lagerplatten 22 einen Schnellverschluß, und zwar mindestens im Prinzip eine Art Kniehebelveschluß oder Exzenterverschluß zwischen der Tragschienenanordnung 8 und der Trennwand 3: Mit Hilfe einer einzigen Hebelvorrichtung wird die Tragschienenanordnung 8 aus der schrägen, offenen Stellung, Fig. 1, in die waagerechte, geschlossene Stellung, Fig. 2, gebracht. Folglich wird jeder einzelne Filter 7 mit seinem oberen Rand 24 dicht gegen den Rand der Öffnung 6 gedrückt. Hierzu ist entweder der Rand 24 als Dichtung ausgebildet oder eine nicht dargestellte zusätzliche Dichtung wird verwendet. Die Ausnehmung 23 dient hierbei letztlich als Anschlag für den Bolzen 16 in der oberen, geschlossenen Stellung, der Betriebsstellung, vergl. Fig. 1.

Oberhalb der Trennwand 3, auf der Reinseite 5, sind oberhalb der Öffnungen 6 Blasdüsen 25 einer Blasluftleitung 26 angeordnet. Mit Hilfe dieser Blaseinrichtung kann Druckluft auf die Filter 7 geblasen werden, wodurch der auf der Staubseite 4 sich angesetzte Staub sich löst und nach unten fällt. Dort kann er durch nicht dargestellte Trichter aufgefangen und entsorgt werden. Die Filter 7 können im Prinzip nahezu beliebig und in unterschiedlicher Weise aufgebaut sein: Einerseits können Komplettfilter verwendet und ausgetauscht werden, andererseits aber auch Filtergehäuse mit austauschbaren Filtereinsätzen oder austauschbare Filtereinsätze mit inneren, wieder verwendbaren Haltern.

Die Filter 7 können entweder getrennt voneinander von der Tragschienenanordnung 8 getragen werden, oder zwischen ihnen sind nicht dargestellte Abstandhalter oder vorzugsweise starre Verbinder angeordnet. Diese können auch aus dem genannten oberen Randbereich 24 bestehen. Dann können zwei oder auch mehrere Filter 7 hintereinander mit vorbestimmtem Abstand auf die Tragschienenanordnung 8 aufgeschoben und sicher den jeweiligen Öffnungen 6 zugeordnet werden.

Im hier beschriebenen Ausführungsbeispiel sind drei Filtereinrichtungen mit je zwei hintereinander angeordneten Filtern dargestellt. Die Erfindung kann jedoch sehr vielseitig auch bei anderen Filteranordnungen Anwendung finden, insbesondere auch dann, wenn Anordnung oder Anzahl der Filter durch entsprechende räumliche Enge praktisch vorgegeben ist.

Der Austausch der evtl. schon ausgeblasenen Filter 7 geht folgendermaßen von statten:

Ausgehend von der Anordnung nach Fig. 2 wird der Hebel 17 am Steg 18 gefaßt und aus der unteren Stellung in die obere Stellung, Fig. 1, verschwenkt. Dadurch senkt sich das vordere, links dargestellte Ende 14 der Tragschienenanordnung 8 und verschwenkt sich diese um die Bolzen 12, und zwar um den Winkel α. Die mit ihrem oberen Rand 24 auf den Tragschienen 9 gelagerten Filter 7 können nun nach vorne, in Fig. 1 nach links, leicht herausgezogen werden. Bei guter, leichtgängiger Lagerung rutschen oder rollen die Filter 7 von selbst nach vorne. Dort können sie durch eine zweckmäßig angebrachte Tür 27 oder Klappe herausgenommen und durch neue oder gereinigte ersetzt werden.

Nach dem Einschieben der neuen Filter 7 in ihre vorbestimmten Stellungen unter den Öffnungen 6 wird der Hebel 17 aus der oberen Stellung, Fig. 1, in die untere Stellung, Fig. 2, verschwenkt: Damit drückt und hält die Tragschienenanordnung 8 den oberen Rand 24 der Filter 7 gegen den Rand der Öffnungen 6, und die Filtereinrichtung 1 ist wieder betriebsbereit.

### Bezugszeichen:

- 1: Filtereinrichtung
- 2: Gehäuse
- 3 .: Trennwand
- 4: Staubseite
- 5: Reinseite
- 6: Öffnung
- 7: Topffilter
- 8: Tragschienenanordnung
- 9: Tragschiene
- 10: hinteres Ende
- 11: Schwenkvorrichtung
- 12: Bolzen
- 13: Ausnehmung
- 14: vorderes Ende
- 15: Befestigungsvorrichtung
- 16: Bolzen
- 17: U-förmiger Hebel
- 18: Steg von 17
- 19: Schenkel von 17
- 20: Bolzen
- 21: Ausnehmung
- 22: Lagerplatte
- 23: Ausnehmung
- 24: Rand
- 25: Blasdüse
- 26: Blasluftleitung
- 27: Tür
- D7: Innendurchmesser von 7
- **S**: Richtung nach vorne
- α: Schwenkwinkel von 8
- **X - X**: Verlauf der Tragschienen
- **Y - Y**: Achse von 16
- **Z - Z**: Mittelachse von 7

## Patentansprüche

1. Filtereinrichtung mit mindestens zwei hintereinander angeordneten Filtern (7), insbesondere zur Entstaubung, die in einem Gehäuse (2) an einer Trennwand (3) lösbar befestigt, parallel durchströmt und auswechselbar sind, wobei die Filter (7) auf einer Tragschienenanordnung (8) gelagert und verschiebbar sind, **dadurch gekennzeichnet, daß** die Tragschienenanordnung (8) zum Auswechseln der Filter (7) derart in einer Schräglage (α) angeordnet ist, daß ein in X-Richtung gesehen vorderes Ende (14) tiefer angeordnet ist als ein in X-Richtung gesehen hinteres Ende (10), so daß die Filter (7) auf der in Schräglage (α) angeordneten Tragschienenanordnung (8) in Richtung zum vorderen, tieferen Ende (14) bewegbar sind.

2. Filtereinrichtung nach Anspruch 1, **dadurch gekennzeichnet, daß** die Filter (7) auf zwei seitlichen Tragschienen (9) gelagert sind.

3. Filteranordnung nach Anspruch 2, **dadurch gekennzeichnet, daß** die Filter (7) nach Art einer Schublade ausgebildet und/oder gelagert sind.

4. Filteranordnung nach einem der Ansprüche 1 bis 3, **dadurch gekennzeichnet, daß** die Tragschienenanordnung (8) im Betriebsfall (Fig. 2) der Filtereinrichtung (1) waagerecht angeordnet ist, aber zum Wechseln der Filter (7) vorübergehend in die Schräglage (α) bringbar ist, in der das vordere Ende (14) tiefer angeordnet ist als das hintere Ende (10).

5. Filtereinrichtung nach Anspruch 4, **dadurch gekennzeichnet, daß** die Tragschienenanordnung (8) so gelagert ist, daß sie an ihrem vorderen Ende (14) nach unten kippbar ist.

6. Filtereinrichtung nach Anspruch 5, **dadurch gekennzeichnet, daß** die Tragschienenanordnung (8) als einarmiger Hebel ausgebildet ist, der am hinteren Ende (10) über eine Schwenkvorrichtung (11) angelenkt ist, und am vorderen Ende (14) eine Befestigungsvorrichtung (15) umfaßt, die im Betriebsfall (Fig. 2) der Filtereinrichtung (1) die Tragschienenanordnung (8) in ihrer waagerechten Funktionsstellung am Gehäuse (2) sichert und im Falle eines Wechsels der Filter (7) die Tragschienenanordnung (8) an ihrem vorderen Ende (14) in der schrägen, gesenkten Lage (α) am Gehäuse (2) festhält.

7. Filtereinrichtung nach Anspruch 6, **dadurch gekennzeichnet, daß** die Befestigungsvorrichtung (15) einen U-förmigen Hebel (17) umfaßt, dessen Steg (18) sich senkrecht zum Verlauf (X-X) der Tragschienen (9) erstreckt.

8. Filtereinrichtung nach Anspruch 7, **dadurch gekennzeichnet, daß** der U-förmige Hebel (17) an der Tragschienenanordnung (8) um eine quer zum Verlauf (X-X) der Tragschienen (9) angeordnete Achse (**Y-Y**) drehbar gelagert ist.

9. Filtereinrichtung nach Anspruch 8, **dadurch gekennzeichnet, daß** jeder Schenkel (19) des U- förmigen Hebels (17) zwei Bolzen (20) aufweist, die mit angepaßten, schlitzförmigen und oberhalb der Achse (**Y-Y**) angeordneten Ausnehmungen (21) zweier senkrechter Lagerplatten (23) am Gehäuse (2) zusammenwirken.

10. Filtereinrichtung nach einem der Ansprüche 6 bis 9, **dadurch gekennzeichnet, daß** die Schwenkvorrichtung (11) aus zwei am Gehäuse (2) verstellbar befestigten, waagerechten Bolzen (12) besteht, die mit angepaßten Ausnehmungen (13) am hinteren Ende (10) der Tragschienenanordnung (8) drehbar zusammenwirken.

11. Filtereinrichtung nach einem der Ansprüche 1 bis 10, **dadurch gekennzeichnet, daß** das Gehäuse (2) im Bereich des vorderen Endes (14) der Tragschienenanordnung (8) eine Tür (27) umfaßt, durch welche die Filter (7) entfernt bzw. eingesetzt werden können.

12. Filtereinrichtung nach einem der Ansprüche 1 bis 11, **dadurch gekennzeichnet, daß** zwischen den Filtern (7) Abstandhalter oder Verbinder angeordnet sind.

13. Filtereinrichtung nach Anspruch 12 in Verbindung mit einem der Ansprüche 1 bis 11, **dadurch gekennzeichnet, daß** die Abstandhalter oder Verbinder oberhalb der Tragschienenanordnung (8) angeordnet sind.

14. Filtereinrichtung nach Anspruch 12 oder 13, **dadurch gekennzeichnet, daß** die Abstandhalter oder Verbinder an den Filtern (7) angeordnet sind.

15. Filtereinrichtung nach einem der Ansprüche 1 bis 14, **dadurch gekennzeichnet, daß** die Filter (7) als Topffilter ausgebildet sind, deren Mittelachse (**Z-Z**) sich mindestens nahezu senkrecht zum Verlauf (**X-X**) der Tragschienenanordnung (8) erstrecken.

16. Filtereinrichtung nach Anspruch 15, **dadurch gekennzeichnet, daß** im Gehäuse (2) oberhalb der Filter (7) zur Reinseite (5) hin eine Trennwand (3) angeordnet ist, welche im Bereich des Innendurchmessers (D7) der Filter (7) Öffnungen (6) zum Durchtritt des zu filternden Mediums aufweist und gegen welche die Filter (7) mit ihrem oberen Rand (24) unter Einwirkung der Tragschienenanordnung (8) dicht anliegen.

17. Filtereinrichtung nach einem der Ansprüche 1 bis 16, **dadurch gekennzeichnet, daß** im Bereich der Reinseite (5) oberhalb der Filter (7) eine Vorrichtung (25, 26) angeordnet ist, durch die zum Entstauben der Filter (7) in Richtung der Staubseite (4) Luft in die Filter (7) geblasen werden kann.

18. Filtereinrichtung nach Anspruch 17, **dadurch gekennzeichnet, daß** im Bereich der Staubseite (4) unterhalb der Filter (7) Trichter zum Auffangen des ausgefilterten und abgeblasenen Materials angeordnet sind.

## Claims

1. Filter device comprising at least two filters (7) arranged behind each other, in particular for the purpose of dedusting, which are removably fixed in a housing (2) to a dividing wall (3), are replaceable and through which there is a parallel flow, whereby the filters (7) are mounted and movable on a mounting rail arrangement (8), **characterised in that** the mounting rail arrangement (8) is arranged for the replacement of the filters (7) in an oblique position (α) such that a front end (14) in the X-direction is arranged deeper than a rear end (10) in the X-direction so that the filters (7) on the mounting rail arrangement (8) arranged in an oblique position (α) are movable in the direction of the front, lower end (14).

2. Filter device according to Claim 1, **characterised in that** the filters (7) are arranged on two lateral mounting rails (9).

3. Filter arrangement according to Claim 2, **characterised in that** the filters (7) are formed and/or mounted in the manner of a drawer.

4. Filter arrangement according to one of Claims 1 to 3, **characterised in that** the mounting rail arrangement (8) is arranged horizontally in the case of operation (Fig. 2) of the filter device (1), but can be temporarily moved to the oblique position (α) to change the filters (7), whereby the front end (14) is arranged lower than the rear end (10).

5. Filter device according to Claim 4, **characterised in that** the mounting rail arrangement (8) is mounted so that it can be tilted downwards at its front end (14).

6. Filter device according to Claim 5, **characterised in that** the mounting rail arrangement (8) is formed as a one-armed lever which is linked at the rear end (10) by means of a swivelling device (11) and comprises a fixing device (15) at the front end (14), whereby said fixing device (15) secures the mounting rail arrangement (8) in its horizontal functional position on the housing (2) when the filter device (1) is in operation (Fig. 2) and holds the mounting rail arrangement (8) at its front end (14) in the oblique, lowered position (α) on the housing (2) when the filters (7) are being changed:

7. Filter device according to Claim 6, **characterised in that** the fixing device (15) comprises a U-shaped lever (17) whose web (18) extends perpendicular to the course (X-X) of the mounting rails (9).

8. Filter device according to Claim 7, **characterised in that** the U-shaped lever (17) is rotatably mounted on the mounting rail arrangement (8) around an axis (Y-Y) arranged at right angles to the course (X-X) of the mounting rails (9).

9. Filter device according to Claim 8, **characterised in that** each limb (19) of the U-shaped lever (17) comprises two bolts (20) which cooperate with adapted, slot-shaped recesses (21), arranged above the axis (Y-Y), of two perpendicular bearing plates (23) on the housing (2).

10. Filter device according to one of Claims 6 to 9, **characterised in that** the swivelling device (11) comprises two horizontal bolts (12) adjustably fixed on the housing (2), which rotatably cooperate with adapted recesses (13) at the rear end (10) of the mounting rail arrangement (8).

11. Filter device according to one of Claims 1 to 10, **characterised in that** the housing (2) comprises a door (27) in the area of the front end (14) of the mounting rail arrangement (8), whereby the filters (7) can be removed and inserted through said door (27).

12. Filter device according to one of Claims 1 to 11, **characterised in that** spacers or connectors are arranged between the filters (7).

13. Filter device according to Claim 12 in combination with one of Claims 1 to 11, **characterised in that** the spacers or connectors are arranged above the mounting rail arrangement (8).

14. Filter device according to Claim 12 or 13, **characterised in that** the spacers or connectors are arranged at the filters (7).

15. Filter device according to one of Claims 1 to 14, **characterised in that** the filters (7) are formed as canister filters whose central axis (Z-Z) extends at least approximately perpendicular to the course (X-X) of the mounting rail arrangement (8).

16. Filter device according to Claim 15, **characterised in that** a dividing wall (3) is arranged in the housing (2) above the filters (7) towards the clean side (5), whereby said dividing wall (3) comprises openings (6) for penetration of the medium to be filtered in the area of the inner diameter (D7) of the filters (7) and the filters (7) fit tightly against said dividing wall (3) with their upper edge (24) under the effect of the mounting rail arrangement (8) .

17. Filter device according to one of Claims 1 to 16, **characterised in that** a device (25, 26) is arranged in the area of the clean side (5) above the filters (7) through which the air used to dedust the filters (7) in the direction of the dust side (4) can be blown into the filters (7).

18. Filter device according to Claim 17, **characterised in that** funnels to collect the filtered and blown out material are arranged in the area of the dust side (4) below the filters (7).

## Revendications

1. Dispositif filtrant avec au moins deux filtres (7) disposés l'un derrière l'autre, notamment en vue du dépoussiérage, qui sont fixés de manière amovible dans un logement (2) à une paroi de séparation (3), circulent en parallèle et sont échangeables, les filtres (7) étant logés sur un agencement de rails supports (8) et pouvant être déplacés, **caractérisé en ce que** l'agencement de rails supports (8) est disposé dans une position inclinée (α) en vue du remplacement des filtres (7) de sorte qu'une extrémité avant (14) vue dans la direction X est disposée plus profondément qu'une extrémité arrière (10) vue dans la direction X de sorte que les filtres (7) peuvent être déplacés sur l'agencement de rails supports (8) disposé dans la position inclinée (α) en direction de l'extrémité avant (14), plus profonde.

2. Dispositif filtrant selon la revendication 1, **caractérisé en ce que** les filtres (7) sont logés sur deux rails supports latéraux (9).

3. Agencement de filtres selon la revendication 2, **caractérisé en ce que** les filtres (7) sont réalisés et/ou logés à la manière d'un tiroir.

4. Agencement de filtres selon l'une quelconque des revendications 1 à 3, **caractérisé en ce que** l'agencement de rails supports (8) est disposé horizontalement en mode de fonctionnement (figure 2) du dispositif filtrant (1) mais peut être amené temporairement dans la position inclinée (α) dans laquelle l'extrémité avant (14) est disposée plus profondément que l'extrémité arrière (10), en vue du remplacement des filtres (7).

5. Dispositif filtrant selon la revendication 4, **caractérisé en ce que** l'agencement de rails supports (8) est logé de sorte qu'il peut être basculé vers le bas sur son extrémité avant (14).

6. Dispositif filtrant selon la revendication 5, **caractérisé en ce que** l'agencement de rails supports (8) est réalisé en tant que levier à un bras qui est articulé au niveau de l'extrémité arrière (10) par l'intermédiaire d'un dispositif de pivotement (11) et comprend au niveau de l'extrémité avant (14) un dispositif de fixation (15) qui fixe l'agencement de rails supports (8) dans sa position de fonctionnement horizontale sur le logement (2) en mode de fonctionnement (figure 2) du dispositif filtrant (1) et maintient l'agencement de rails supports (8) sur son extrémité avant (14) dans la position inclinée, abaissée (α) sur le logement (2) en cas de remplacement des filtres (7).

7. Dispositif filtrant selon la revendication 6, **caractérisé en ce que** le dispositif de fixation (15) comprend un levier en forme de U (17) dont la traverse (18) s'étend perpendiculairement à l'étendue (X-X) des rails supports (9).

8. Dispositif filtrant selon la revendication 7, **caractérisé en ce que** le levier en forme de U (17) est logé à rotation sur l'agencement de rails supports (8) autour d'un axe (Y-Y) disposé de manière transversale par rapport à l'étendue (X-X) des rails supports (9) .

9. Dispositif filtrant selon la revendication 8, **caractérisé en ce que** chaque branche (19) du levier en forme de U (17) présente deux boulons (20) - qui coopèrent avec des évidements adaptés (21) en forme de fente et disposés au-dessus de l'axe (Y-Y) de deux plaques d'appui perpendiculaires (23) sur le logement (2).

10. Dispositif filtrant selon l'une quelconque des revendications 6 à 9, **caractérisé en ce que** le dispositif de pivotement (11) se compose de deux boulons horizontaux (12), fixés de manière réglable au logement (2) qui coopèrent à rotation avec des évidements adaptés (13) au niveau de l'extrémité arrière (10) de l'agencement de rails supports (8).

11. Dispositif filtrant selon l'une quelconque des revendications 1 à 10, **caractérisé en ce que** le logement (2) comprend dans la région de l'extrémité avant (14) de l'agencement de rails supports (8) une porte (27) à travers laquelle les filtres (7) peuvent être retirés ou insérés.

12. Dispositif filtrant selon l'une quelconque des revendications 1 à 11, **caractérisé en ce que** des écarteurs ou des raccords sont disposés entre les filtres (7).

13. Dispositif filtrant selon la revendication 12 en liaison avec l'une quelconque des revendications 1 à 11, **caractérisé en ce que** les écarteurs ou raccords sont disposés au-dessus de l'agencement de rails supports (8).

14. Dispositif filtrant selon la revendication 12 ou 13, **caractérisé en ce que** les écarteurs ou raccords sont disposés sur les filtres (7).

15. Dispositif filtrant selon l'une quelconque des revendications 1 à 14, **caractérisé en ce que** les filtres (7) sont réalisés en tant que filtre de pot dont les axes médians (Z-Z) s'étendent au moins presque perpendiculairement à l'étendue (X-X) de l'agencement de rails supports (8).

16. Dispositif filtrant selon la revendication 15, **caractérisé en ce qu'**une paroi de séparation (3) qui présente dans la région du diamètre interne (D7) des filtres (7) des ouvertures (6) en vue du passage du milieu à filtrer et contre laquelle les filtres (7) reposent de manière étanche avec leur bord supérieur (24) sous l'effet de l'agencement de rails supports (8), est disposée dans le logement (2) au-dessus des filtres (7) vers le côté propre (5).

17. Dispositif filtrant selon l'une quelconque des revendications 1 à 16, **caractérisé en ce qu'**un dispositif (25, 26) à travers lequel de l'air peut être insufflé dans les filtres (7) en vue du dépoussiérage des filtres (7) dans la direction du côté poussière (4), est disposé dans la région du côté propre (5) au-dessus des filtres (7).

18. Dispositif filtrant selon la revendication 17, **caractérisé en ce que** des entonnoirs sont disposés dans la région du côté poussière (4) en dessous des filtres (7) en vue de recueillir le matériau filtré et purgé.
